# EUROPÄISCHE PATENTSCHRIFT

(11) **EP 1 535 955 B1**
(45) Veröffentlichungstag und Bekanntmachung des Hinweises auf die Patenterteilung: **07.03.2007**
(21) Anmeldenummer: 04024708.2
(22) Anmeldetag: 16.10.2004
(51) Int. Cl.: C08J 9/18, C08J 9/228, C08L 23/12

(54) **Verfahren zur Herstellung expandierbarer Polyolefinpartikel mittels Kaltimprägnierung**
Process for producing expandable polyolefin particles by impregnation at low temperatures
Procédé de préparation des particules expansibles de polyoléfine par imprégnation à froid

(30) Priorität: 27.11.2003 DE 10356017
(43) Veröffentlichungstag der Anmeldung: 01.06.2005
(73) Patentinhaber: BASF Aktiengesellschaft, 67056 Ludwigshafen (DE)
(72) Erfinder: Maletzko, Christian Dr., 67122 Altrip (DE); Braun, Frank Dr., 67063 Ludwigshafen (DE); Keppeler, Uwe Dr., 67126 Hochdorf-Assenheim (DE); Naegele, Dieter Dr., 67550 Worms (DE); Hahn, Klaus Dr., 67281 Kirchheim (DE); De Grave, Isidoor Dr., 67157 Wachenheim (DE)

(56) Entgegenhaltungen:
- EP-A- 1 229 070
- EP-A- 1 281 729
- US-A- 3 351 569

## Beschreibung

Die Erfindung betrifft ein Verfahren zur Herstellung von expandierbaren Polyolefinpartikeln aus einem Polyolefin, einem Nukleierungsmittel und einem Treibmittel, dadurch gekennzeichnet, dass man
a) das Polyolefin mit dem Nukleierungsmittel in einem Extruder vermischt und das erhaltene Polyolefin bis zur Erstarrung abkühlt,
b) das abgekühlte Polyolefin tempert, indem man es auf eine Temperatur im Bereich von 100 bis 200°C erwärmt und danach wieder auf unter 100°C abkühlt, und
c) das erhaltene Polyolefin bei unter 100°C mit dem Treibmittel imprägniert,
wobei das Polyolefin am Ende von Schritt a) oder b) granuliert wird.

Weiterhin betrifft die Erfindung die nach dem Verfahren erhältlichen expandierbaren Polyolefinpartikel, und deren Verwendung zur Herstellung von expandierten Polyolefinpartikeln oder von Polyolefin-Schaumstoffen.

Expandierbare Polyolefinpartikel, beispielsweise solche aus Polypropylen (XPP), sind bekannt. Sie enthalten in feiner Verteilung eingeschlossenes, jedoch noch nicht expandiertes Treibmittel und weisen deshalb eine deutlich höhere Dichte auf als expandierte Polyolefine. Nach den Verfahren des Standes der Technik wird das Polyolefin als Granulat mit Wasser, einem Suspensionshilfsmittel und dem Treibmittel in einem geschlossenen Reaktor bis über die Erweichungstemperatur des Granulats erhitzt und bei dieser Temperatur gehalten. Dabei werden die Polymerpartikel mit dem Treibmittel imprägniert. Anschließend wird die Suspension abgekühlt, wobei sich die Partikel unter Einschluss des Treibmittels verfestigen, der Reaktor entspannt und die treibmittelhaltigen (expandierbaren) Partikel aus der Suspension abgetrennt.

So beschreibt die EP-A 540 271 ein Verfahren zur Herstellung expandierbarer Polymerpartikel aus einem Polypropylen-Polyphenylenether-Blend, bei dem aus Polypropylen und Polyphenylenether auf einem Extruder ein Blend hergestellt und granuliert wird. Das Granulat wird mit Wasser, Suspensionshilfsmittel (dispersion agent) und einem Halogenkohlenwasserstoff-Treibmittel bis zur Erweichung der Blendpartikel erhitzt, wieder abgekühlt, der Reaktor entspannt und die imprägnierten Partikel isoliert.

Die WO 01/29119 und EP-A 1 281 729 offenbaren ein ähnliches Verfahren, bei dem ein Polyolefingranulat in wässriger Suspension unter Druck und erhöhter Temperatur (120 bis 150°C für Polypropylen) mit einem Treibmittel imprägniert wird. Danach wird die Suspension auf unter 100°C abgekühlt, der Reaktor entspannt und die Partikel abgetrennt.

Alternativ und in der EP-A 1 132 420 beschrieben kann man expandierbare Polyolefinpartikel herstellen, indem man das Polyolefin in einem Extruder mit einem Treibmittel vermischt und unter solchen Temperatur- und Druckbedingungen auspresst und granuliert, dass das Granulat nicht schäumt (expandiert). Zur Granulierung wird eine Unterwassergranulierung eingesetzt, die bei mehr als 2 bar, beispielsweise 8 bis 12 bar Wasserdruck und 30 bis 60°C Wassertemperatur betrieben wird, oder eine Wasserringgranulierung.

In der WO 02/062882 werden nach einem der beiden vorgenannten Verfahren erhältliche Polyolefinpartikel beschrieben, die mit einer Antiverklebungsmittelbeschichtung versehen sind, um das Verkleben der Partikel zu verhindern.

Bei der Herstellung via Suspension kann die wässrige Phase nicht wiederverwendet werden. Sie ist insbesondere durch das Suspensionshilfsmittel verunreinigt und muss als Abwasser in großer Menge gereinigt und entsorgt werden. Außerdem bilden sich in der Suspension aus dem erweichten Polyolefingranulat unerwünschte Agglomerate.

Die Herstellung via Extrusion verkompliziert sich dadurch, dass genau definierte Druckund Temperaturbedingungen eingehalten werden müssen, um beim Auspressen aus dem Extruder ein Expandieren der Partikel zu verhindern. Außerdem sind eine Unterwassergranulierung oder Wasserringgranulierung aufwändig zu betreiben.

Die Eigenschaften der Polyolefinpartikel, insbesondere ihre thermischen Eigenschaften, können durch Differential Scanning Calorimetry (DSC) charakterisiert werden. Partikel mit einem Doppelpeak im DSC-Diagramm, siehe z.B. EP 963 827 B1, haben besonders vorteilhafte Eigenschaften.

Es bestand die Aufgabe, den geschilderten Nachteilen abzuhelfen. Insbesondere bestand die Aufgabe, ein Verfahren bereitzustellen, mit dem sich expandierbare Polyolefinpartikel auf einfache Weise herstellen lassen.

Bei dem Verfahren sollten nur einfach zu reinigende Abwässer anfallen. Idealerweise sollte nur wenig oder überhaupt kein Abwasser anfallen.

Außerdem sollte die Granulierung vereinfacht sein und ohne besondere Druck- und Temperaturbedingungen auskommen. Es sollten keine aufwändigen Granuliervorrichtungen erforderlich sein.

Schließlich sollten sich Partikel herstellen lassen, die einen DSC-Doppelpeak aufweisen.

Demgemäß wurden das eingangs genannte Verfahren, die genannten expandierbaren Polyolefinpartikel, und deren genannte Verwendung gefunden. Bevorzugte Ausführungsformen der Erfindung sind den Unteransprüchen zu entnehmen.

Bei dem erfindungsgemäßen Verfahren werden aus einem Polyolefin, einem Nukleierungsmittel und einem Treibmittel expandierbare Polyolefinpartikel hergestellt. In Schritt a) des Verfahrens wird das Polyolefin mit dem Nukleierungsmittel in einem Extruder vermischt und das erhaltene, nukleierungsmittelhaltige Polyolefin bis zur Erstarrung abgekühlt.

Als Polyolefine sind insbesondere geeignet:
1) Homopolypropylen,
2) Randomcopolymere des Propylens mit 0,1 bis 15, bevorzugt 0,5 bis 12 Gew.-% eines Comonomeren. Bevorzugtes Comonomer ist Ethylen oder ein C₄₋₁₀-α-Olefin oder deren Mischungen. Besonders bevorzugte Randomcopolymere sind Copolymere von Propylen mit 0,5 bis 6 Gew.-% Ethylen oder mit 0,5 bis 15 Gew.-% But-1-en, oder ein Terpolymer aus Propylen, 0,5 bis 6 Gew.-% Ethylen und 0,5 bis 6 Gew.-% But-1-en,
3) Mischungen der unter 1) oder 2) genannten Polymere mit 0,1 bis 75, bevorzugt 3 bis 50 Gew.-% eines Polyolefin-Elastomeren, z.B. eines Ethylen-Propylen-Blockcopolymeren mit 30 bis 70 Gew.-% Propylen,
4) Polyethylene, beispielsweise LD (low density), LLD (linear low density), MD (medium density) oder HD (high density), HMW (high molecular weight) oder UHMW (ultra high molecular weight), oder
5) Mischungen der unter 1) bis 4) genannten Polymere, wobei ggf. Phasenvermittler mitverwendet werden, um die Phasenanbindung der in manchen Fällen unverträglichen Polymere zu verbessern.

Der Kristallitschmelzpunkt geeigneter Polyolefine liegt üblicherweise im Bereich von 90 bis 170°C. Er ist beispielsweise als Peakmaximum im Differential Scanning Calorimetry (DSC)-Diagramm bestimmbar. Die Schmelzwärme der Polyolefine ist ebenfalls per DSC bestimmbar und beträgt im allgemeinen 20 bis 300 J/g. Der Schmelzflussindex (MFI, melt flow index) des Polyolefins beträgt in der Regel 0,1 bis 100 g/10 min, ermittelt bei 230°C und 2,16 kg Belastung für Propylenpolymere bzw. 190°C und 2,16 kg Belastung für Ethylenpolymere, nach DIN 53 735.

Bevorzugt verwendet man als Polyolefin ein Polypropylen. Bevorzugte Polyolefine sind Homo- oder Copolymere des Propylens mit bis zu 15 Gew.-% Etylen und/oder But-1-en, besonders bevorzugt sind Propylen-Ethylen-Copolymere mit 1 bis 5 Gew.-% Ethylen. Sie weisen einen Kristallitschmelzpunkt von 130 bis 160°C, und eine Dichte von etwa 0,9 g/cm³, auf.

Die Polyolefine sind bekannt und können nach üblichen Verfahren erhalten werden, beispielsweise nach dem Hochdruck- (ICI), Mitteldruck- (Phillips), Niederdruck- (Ziegler), Gasphasen-, Gasphasenwirbelbett- oder Metallocen-Verfahren.

Das Polyolefin kann mit bis zu 50 % seines Gewichts eines weiteren Thermoplasten mit einer Glasübergangstemperatur (bestimmbar z.B. als Wendepunkt im DSC-Diagramm) unterhalb von 180°C abgemischt sein. Geeignete Thermoplasten sind z.B. Polyamide in Mengen von 5 bis 40 Gew.-%, wobei der Mischung übliche Phasenvermittler, z.B. Blockcopolymerisate, wie Exxelor® P 1015 von Fa. Exxon, zugesetzt werden können.

Es hat sich gezeigt, dass die Erfindung auch ohne Zumischen eines solchen weiteren Thermoplasten durchführbar ist. Dies ist insofern bevorzugt, als durch einen Fremdthermoplasten die Recyclierbarkeit des Polyolefins bzw. des daraus hergestellten Schaumstoffs leidet. Kautschukartige Ethylen-Propylen-Copolymerisate, die zur Elastifizierung zugesetzt werden können, zählen in diesem Sinne nicht zu den weiteren Thermoplasten.

Das Polyolefin kann als handelsübliches Granulat, Pulver, Grieß oder sonstiger Form eingesetzt werden. Zweckmäßigerweise wird es als Granulat eingesetzt. Geeignet ist z.B. ein sog. Minigranulat, ein Polyolefingranulat mit einem bevorzugten mittleren Durchmesser von 0,2 bis 10, insbesondere von 0,5 bis 5 mm. Dieses meist zylinderförmige oder runde Minigranulat wird hergestellt durch Extrudieren des Polyolefins, gegebenenfalls zusammen mit dem zuzumischenden Thermoplasten, und weiteren Zusatzstoffen, Auspressen aus dem Extruder, gegebenenfalls Abkühlen und Granulieren. Bei zylinderförmigem Minigranulat beträgt die Länge bevorzugt 0,2 bis 10, insbesondere 0,5 bis 5 mm. Das Granulat kann auch plättchenförmig geformt sein.

Als Nukleierungsmittel eignen sich beispielsweise Talkum, Wachse, insbesondere Polyolefinwachse wie z.B. Homo- oder Copolymere des Ethylens, außerdem Paraffine, Ruße, Graphitpulver, Kieselsäuren, bevorzugt pyrogene Kieselsäuren, weiterhin Zeolithe, Citronensäureester und Bentonite, insbesondere modifizierte Bentonite. Das Nukleierungsmittel bewirkt, dass bei der Expansion (Aufschäumen) der expandierbaren Partikel ein feinzelliger Schaum entsteht, in manchen Fällen ermöglicht es überhaupt erst das Schäumen. Selbstverständlich können auch Mischungen dieser Nukleierungsmittel verwendet werden; dies kann besonders vorteilhaft sein.

Die Menge des Nukleierungsmittels beträgt in der Regel 0,01 bis 8, bevorzugt 0,1 bis 5 Gew.-Teile, bezogen auf 100 Gew.-Teile Polyolefin und gerechnet als Summe aller Nukleierungsmittel.

Das Polyolefin kann außerdem die üblichen Zusatzstoffe enthalten, oder die Zusatzstoffe können im Extruder zugefügt werden. Solche Zusatzstoffe sind z.B. Antioxidantien, Stabilisatoren, Flammschutzmittel, Wachse, Füllstoffe, Pigmente und Farbstoffe. Sie werden in üblichen, an sich bekannten Mengen verwendet.

Polyolefin, Nukleierungsmittel und ggf. Zusatzstoffe können dem Extruder gemeinsam (als Mischung) oder getrennt voneinander, an einer oder an verschiedenen Stellen des Extruders zugeführt werden. Beispielsweise kann man zunächst Polyolefin, Nukleierungsmittel und ggf. Zusatzstoffe mischen und die Mischung dem Extruder zuführen.

Im Extruder werden die genannten Einsatzstoffe unter Aufschmelzen des Polyolefins vermischt. Als Extruder kommen alle üblichen Schneckenmaschinen in Betracht, insbesondere Einschnecken- und Doppelschneckenextruder (z.B. Typ ZSK von Fa. Werner & Pfleiderer), Ko-Kneter, Kombiplast-Maschinen, MPC-Knetmischer, FCM-Mischer, KEX-Knetschneckenextruder und Scherwalzenextruder, wie sie z.B. in Saechtling (Hg.), Kunststoff-Taschenbuch, 27. Auflage, Hanser-Verlag München1998, Kap. 3.2.1 und 3.2.4, beschrieben sind.

Der Extruder wird üblicherweise bei einer Temperatur betrieben, bei der das Polyolefin als Schmelze vorliegt. In der Regel beträgt die Temperatur 130 bis 250, für Polypropylen beispielsweise 160 bis 220°C.

Drehzahl, Länge, Durchmesser und Ausgestaltung der Extruderschnecke(n), zugeführte Mengen und Extruderdurchsatz werden in bekannter Weise derart gewählt, dass im extrudierten Polyolefin das Nukleierungsmittel und ggf. die Zusatzstoffe gleichmäßig verteilt sind.

Das den Extruder verlassende, nukleierungmittelhaltige Polyolefin wird bis zur Erstarrung (Verfestigung der Schmelze) abgekühlt, beispielsweise indem man die aus der Düsenplatte des Extruders austretenden Polymerstränge durch Luft oder ein anderes Kühlmedium, beispielsweise Wasser, führt. In einer bevorzugten Ausführungsform wird danach das erstarrte Polyolefin granuliert, wozu übliche Granuliervorrichtungen verwendet werden können. Auch eine Unterwassergranulierung oder eine Wasserringgranulierung ist möglich, jedoch nicht erforderlich. Bei der Unterwassergranulierung befindet sich die Düsenplatte unter Wasser (oder einem anderen Kühlemedium) und die austretende Schmelze wird von Messern abgetrennt, die an der Außenseite der Düsenplatte rotieren. Bei der Wasserringgranulierung ist der Schneidraum eingekapselt.

Es kann bei üblichen Druckbedingungen granuliert werden, beispielsweise Atmosphärendruck, etwa Normaldruck 1013 mbar. Insbesondere ist es nicht erforderlich, unter Überdruck zu granulieren, wodurch das erfindungsgemäße Verfahren einfacher und kostengünstiger ist.

Das granulierte Polyolefin wird anschließend in der Regel vom Kühlmedium abgetrennt und ggf. getrocknet.

In einer anderen, ebenfalls bevorzugten Ausführungsform wird das erstarrte Polyolefin erst nach dem Tempern (Ende von Schritt b), siehe weiter unten) granuliert. Beispielsweise kann man die erstarrten Polymerstränge ohne Zerkleinerung tempern, und erst danach granulieren wie soeben beschrieben.

Unter Granulieren sollen auch andere Zerkleinerungsverfahren verstanden werden, die das Polyolefin soweit zerkleinern, dass es für die Imprägnierung mit dem Treibmittel (siehe Schritt c) weiter unten) geeignet ist. Bevorzugt stellt man ein Minigranulat her, wie es weiter oben bereits beschrieben wurde.

In Schritt b) des erfindungsgemäßen Verfahrens wird das abgekühlte und ggf. granulierte Pololefin getempert, indem man es auf eine Temperatur (Tempertemperatur) im Bereich von 100 bis 200°C erwärmt und danach wieder auf unter 100°C abkühlt. Beim Tempern wird das Material unter definierten Bedingungen erwärmt und wieder abgekühlt.

Solche Temperbedingungen sind beispielsweise Starttemperatur, Aufheizzeit, Maximaltemperatur nach dem Aufheizen, Temperzeit bei dieser Maximaltemperatur, Abkühlzeit, Temperaturprogramm (z.B. Aufheizen und Abkühlen entlang einer linearen, exponentiellen oder Stufenfuktion), und Endtemperatur nach dem Abkühlen. Unter Tempertemperatur wird hier die Maximaltemperatur verstanden.

Die Tempertemperatur liegt im Bereich der Schmelztemperatur, insbesondere im Bereich des bereits erwähnten Kristallitschmelzpunkts des Polyolefins. Sie liegt erfindungsgemäß im Bereich von 100 bis 200, bevorzugt 120 bis 170°C, für Polypropylen insbesondere 140 bis 160°C.

Die Temperzeit bei der Tempertemeratur (Maximaltemperatur) beträgt in der Regel 0 min bis 10 Stunden, bevorzugt 0 min bis 60 min. Dabei bedeutet 0 min, dass das Polyolefin auf die Maximaltemperatur aufgeheizt und sofort danach wieder abgekühlt wird, d.h. es wird nicht bei der Maximaltemperatur gehalten. Naturgemäß dauert der gesamte Tempervorgang länger als die genannte Temperzeit, da die Zeiten für das Aufheizen und Abkühlen hinzukommen. Die Aufheizzeit liegt üblicherweise bei 1 min bis 10 Stunden, bevorzugt 1 min bis 4 Stunden.

Im Unterschied zu den Verfahren des Standes der Technik enthalten die Polyolefinpartikel beim Tempern noch kein Treibmittel. Deshalb kann das Tempern bei Atmosphärendruck, beispielsweise Normaldruck 1013 mbar, erfolgen. Es sind keine aufwändigen Vorrichtungen zum Arbeiten bei Überdruck erforderlich , was das Verfahren erheblich vereinfacht und kostengünstiger macht. Natürlich kann man auch bei anderen Drucken tempern, beispielsweise 0,5 bis 50 bar absolut, bevorzugt ist dies jedoch nicht. Ausnahme ist nur das Tempern in Wasser oder anderen Medien, die bei der Tempertemperatur über 100°C verdampfen. Hier ist ein geringer Überdruck erforderlich, siehe weiter unten.

Das nach dem Tempern erhaltene Polyolefin kann mit DSC untersucht werden. Bevorzugt wird das Tempern derart ausgestaltet, dass das in Schritt b) erhaltene, getemperte Polyolefin im DSC-Diagramm einen sog. Doppelpeak aufweist. Insbesondere werden die Tempertemperatur und die sonstigen Temperbedingungen entsprechend gewählt.

Der Doppelpeak besteht aus einem bei niedrigerer Temperatur gelegenen Peak (Niedertemperaturpeak), und einem bei höherer Temperatur gelegenen Peak (Hochtemperaturpeak). Man erhält das DSC-Diagramm beispielsweise durch Aufheizen einer Probe des getemperten Polyolefins (Menge beispielsweise 1 bis 8 mg) auf 200 bis 220°C mit einer Heizrate von 10 bis 20 K/min in einem DSC-Kalorimeter. Weitere Einzelheiten sind Absatz [0036] und Fig. 1 der EP 963 827 B1 zu entnehmen, auf die ausdrücklich verwiesen wird.

Es hat sich als vorteilhaft erwiesen, in Schritt b) die Temperbedingungen dem verwendeten Polyolefin anzupassen und insbesondere auf eine exakte Temperaturführung zu achten. Beispielsweise kann eine zu hohe Tempertemperatur (Maximaltemperatur) dazu führen, dass die kristallinen Bereiche des Polyolefins, z.B. des Polypropylens, vollständig aufschmelzen, was die Ausbildung eines Hochtemperaturpeaks verhindern würde. Auch die Temperzeit beeinflusst die Ausbildung des Doppelpeaks u.a. derart, dass bei längerer Temperzeit die Fläche unter dem Hochtemperaturpeak (siehe die genannte EP 963 827 B1) größer wird. Ein mehrstufiges Tempern, d.h. Aufheizen und/oder Abkühlen entlang einer Stufenfunktion, kann vorteilhaft sein.

Durch Auswählen optimaler Temperbedingungen lassen sich die Eigenschaften der erfindungsgemäßen expandierbaren Polyolefinpartikel variieren. Beispielsweise können auf diese Weise das Verhalten der expandierbaren Polyolefinpartikel beim späteren Verschäumen, die Zellgröße des beim Verschäumen erhaltenen Schaums, die Verarbeitbarkeit der expandierten Schaumpartikel zu Formteilen, und die mechanischen Eigenschaften der Formteile angepasst werden. Dabei kann man die optimalen Temperbedingungen durch Vorversuche in einfacher Weise ermitteln und dem jeweiligen Polyolefin und den gewünschten Eigenschaften anpassen.

Das Tempern kann diskontinuierlich oder kontinuierlich erfolgen. Es sind alle Vorrichtungen geeignet, die eine definierte Einstellung der Temperbedingungen wie Tempertemperatur und -zeit, erlauben. Beispielsweise kann man Wärmeschränke, Öfen, insbesondere Drehrohröfen, oder ein Transportband, das von IR-Strahlern bestrahlt wird, verwenden. Das Polyolefin kann zu diesem Zweck z.B. auf Blechen oder Metallgewebenetzen ausgebreitet werden. Bei kontinuierlicher Ausgestaltung kann das in Schritt a) erhaltene Polyolefin direkt aus dem Granulator in den Ofen bzw. auf das Transportband geleitet werden, bzw. die ungranulierten Polyolefinstränge durch eine mit IR-Strahlern versehene Strecke geleitet werden. Außerdem kann man auch in einem flüssigem Medium tempern, siehe weiter unten.

Sofern das Polyolefin am Ende von Schritt a) noch nicht granuliert wurde, also noch als Polymerstränge vorliegt, wird es am Ende von Schritt b) granuliert. Diese Ausführungsform kann vorteilhaft sein, da sich bei diesem Granulieren nach dem Tempern u.U. weniger Agglomerate bilden als bei Granulierung vor dem Tempern. Die Granulierung wurde weiter oben bereits beschrieben.

Da die Tempertemperaturen im Bereich der Polyolefin-Schmelztemperaturen liegen, ist das Polyolefin erweicht und neigt zur Agglomeration, d.h. ein Teil der Granulatkörner kann aneinander haften. Diese Agglomeratbildung lässt sich vermeiden, indem man nach dem Tempern granuliert, denn das Aneinanderhaften der Stränge lässt sich durch ausreichenden Abstand der Stränge verhindern. Granuliert man vor dem Tempern, kann man die Agglomeratbildung durch Behandeln des Granulats mit einem Antiblockingmittel (Antiverklebungsmittel) vermindern oder ganz vermeiden.

Geeignete Antiblockingmittel sind z.B. Talkum, Metallverbindungen wie Tricalciumphosphat, Calciumcarbonat, Kieselsäuren, insbesondere pyrogene Kieselsäuren wie Aerosil® von Fa. Degussa, Salze langkettiger (C₁₀₋₂₂) Carbonsäuren, beispielsweise Stearinsäuresalze wie Calciumstearat, Ester langkettiger Carbonsäuren, z.B. Glycerinester wie die Glycerinstearate, und Silikonöle.

Das Antiblockingmittel wird in der Regel vor dem Tempern aufgebracht, beispielsweise durch Mischen, Aufsprühen, Auftrommeln oder andere übliche Verfahren. Es wird üblicherweise in Mengen von 0,01 bis 20, bevorzugt 0,1 bis 10, besonders bevorzugt 0,5 bis 6 Gew.-Teilen, bezogen auf 100 Gew.-Teile des nukleierungsmittelhaltigen Polyolefins, verwendet.

Insbesondere dann, wenn sich die Bildung von Agglomeraten durch sonstige Maßnahmen nicht hinreichend vermeiden lässt, kann man das Tempern auch in einem flüssigen oder gasförmigen Medium vornehmen. Das Medium dient als Wärmeträger. Beispielsweise kann man Wasser, temperaturbeständige Wärmeträgeröle, z.B. solche auf Silikonbasis, oder niedrigschmelzende Metallegierungen verwenden. Im Falle von Wasser sind aufgrund seines Siedepunktes Druckbehälter erforderlich, in denen das Wasser und das zu tempernde Pololefin erwärmt und wieder abgekühlt werden. Da das Polyolefin beim Tempern noch kein Treibmittel erhält, liegt der Druck mit typischerweise 3 bis 7 bar Überdruck deutlich unter dem Druck, der zum Tempern treibmittelhaltiger Polyolefine erforderlich wäre.

Ggf. entstandene Agglomerate können nach dem Tempern auch mechanisch auf einfache Weise voneinander getrennt werden, beispielsweise durch Scherung, denn das Granulat ist nach der Abkühlphase des Temperns fest, kompakt und mechanisch unempfindlich. Geeignete Aggregate zur Agglomerattrennung sind bekannt, z.B. zwei mit unterschiedlichen Geschwindigkeiten rotierende Walzen. Sollten sich einige Agglomerate nicht trennen lassen, kann man sie durch Aussieben abtrennen und wieder dem Extruder zuführen, sodass kein Polymerabfall anfällt.

Das Tempern beinhaltet ein Abkühlen auf unter 100°C. Üblicherweise beträgt die Endtemperatur nach dem Abkühlen -20 bis 100, bevorzugt 0 bis 80°C. Man kann z.B. bis auf Raumtemperatur 23°C abkühlen, oder bei höherer Temperatur belassen, insbesondere dann, wenn die Imprägnierung mit dem Treibmittel, Schritt c), bei solch höherer Temperatur erfolgen soll.

In Schritt c) des erfindungsgemäßen Verfahrens wird das erhaltene Polyolefin bei unter 100°C mit einem Treibmittel imprägniert.

Als Treibmittel eignen sich bevorzugt flüchtige organische Verbindungen mit einem Siedepunkt bei Normaldruck 1013 mbar von -5 bis 150, insbesondere 25 bis 125°C. Gut geeignet sind Kohlenwasserstoffe (bevorzugt halogenfrei), insbesondere C₄₋₁₀-Alkane, beispielsweise die Isomere des Pentans, Hexans, Heptans und Octans, besonders bevorzugt s-Pentan. Geeignete Treibmittel sind außerdem sterisch anspruchsvollere Verbindungen wie Alkohole, Ketone, Ester, Ether und organische Carbonate. Bevorzugte Ketone sind 3,3-Dimethyl-2-butanon (= Pinakolon bzw. veraltet Pinakolin) und 4-Methyl-2-pentanon (= Methylisobutylketon). Als Ester kann man bevorzugt Isobutylacetat verwenden.

Auch Halogenkohlenwasserstoffe können verwendet werden, jedoch ist dies nicht besonders bevorzugt. Besonders bevorzugt ist das Treibmittel halogenfrei. Geringe Anteile halogenhaltiger Treibmittel im Treibmittelgemisch sollen jedoch nicht ausgeschlossen werden. Es versteht sich, dass auch Mischungen der genannten Treibmittel verwendet werden können.

Die Treibmittelmenge wird derart gewählt, das die Polyolefinpartikel später ausreichend aufschäumen. In der Regel verwendet man 1 bis 50, insbesondere 3 bis 30 Gew.-Teile Treibmittel, bezogen auf 100 Gew.-Teile des nukleierungsmittelhaltigen Polyolefins und gerechnet als Summe aller Treibmittel.

Die Temperatur beim Imprägnieren beträgt erfindungsgemäß unter 100°C, d.h. im Gegensatz zu den Verfahren des Standes der Technik wird das Polyolefin im festen und nicht im erweichten Zustand imprägniert. Dies wird auch als Kaltimprägnierung bezeichnet. Da das feste Polyolefin imprägniert wird, treten anders als bei der eingangs beschriebenen Imprägnierung in heißer Suspension keine unerwünschten Agglomerate auf.

Bevorzugt imprägniert man bei -20 bis 100, insbesondere 0 bis 80 und besonders bevorzugt 20 bis 80°C. Dabei verkürzt eine höhere Imprägniertemperatur in der Regel die Imprägnierzeit. Falls erforderlich kann man unter definierten Bedingungen aufheizen, nach Erreichen der Imprägniertemperatur bei dieser Temperatur halten und danach wieder abkühlen, wie dies für das Tempern bereits beschrieben wurde.

Der Druck beim Imprägnieren kann Atmosphärendruck sein, z.B. Normaldruck 1013 mbar. Jedoch kann man auch bei erhöhtem Druck imprägnieren, was die Imprägnierzeit deutlich verkürzt. Ein solches Imprägnieren unter Überdruck kann auch dann erforderlich sein, wenn man bei Imprägniertemperaturen über dem Siedepunkt des Treibmittels imprägniert. Geeignete Imprägnierdrucke liegen bei 0,1 bis 50, bevorzugt 0,1 bis 10 bar absolut.

Die Imprägnierzeit (Dauer des Imprägnierens) richtet sich u.a. nach Imprägniertemperatur und -druck, der Art und Menge von Polyolefin und Treibmittel, insbesondere nach der Treibmittelmenge, die aufgenommen werden soll, den Diffusionseigenschaften und der Verträglichkeit von Treibmittel und Polyolefin. Die Imprägnierzeit bei der Imprägniertemperatur beträgt üblicherweise 1 min bis mehrere Tage, beispielsweise 30 min bis 20 Stunden. Jedoch kann man auch nach Erreichen der Imprägniertemperatur sofort wieder abkühlen.

Man kann beispielsweise eine definierte Treibmittelmenge zugeben und so lange imprägnieren, bis diese Menge aufgenommen ist. Letzteres ist üblicherweise daran erkennbar, dass das Polymergranulat, das zuvor vom Treibmittel befeuchtet war und deshalb aneinander haftete, wieder rieselfähig ist. In einer anderen Ausführungsform verwendet man das Treibmittel im Überschuss - beispielsweise kann man das Granulat mit dem Treibmittel überschichten - und beendet die Imprägnierung, wenn die vom Granulat aufgenommene Treibmittelmenge ausreicht. Das überschüssige Treibmittel kann man vom imprägnierten Granulat abtrennen und wiederverwenden.

Das Imprägnieren kann diskontinuierlich oder kontinuierlich erfolgen. Es sind alle Vorrichtungen geeignet, die eine definierte Einstellung der Imprägnierbedingungen, insbesondere Temperatur, Druck und Zeit, erlauben. Beispielsweise kann man Polyolefingranulat und Treibmittel in einem Behälter, ggf. Druckbehälter, durchmischen. Bei kontinuierlicher Fahrweise kann man z.B. das Granulat zusammen mit dem Treibmittel durch ein an seinem Ende gedrosseltes Druckrohr (Staurohr) fördern. Das Druckrohr kann temperiert sein; als Drosselvorrichtung eignen sich z.B. mechanische Drosseln.

Der aufgrund der Drosselung entstehende Staudruck entspricht dem Imprägnierdruck, und die Verweilzeit des Granulats im Rohr entspricht der Imprägnierzeit. Imprägnierdruck und -zeit können beispielsweise durch die Rohrlänge und -temperatur, die Förderleistung (Durchsatz) und das Ausmaß der Drosselung (Druckabfall) eingestellt werden. Derartige Vorrichtungen sind bekannt und werden ansonsten z.B. bei der Unterwassergranulierung unter Druck, eingesetzt.

Nach erfolgter Imprägnierung wird üblicherweise das imprägnierte Granulat vom Treibmittel abgetrennt und durch Trocknen von anhaftenden Treibmittelresten befreit.

Es ist ein besonderer Vorteil des erfindungsgemäßen Verfahrens, das kein Abwasser anfällt.

Als Produkt des erfindungsgemäßen Verfahrens erhält man expandierbare Polyolefinpartikel. Sie sind ebenfalls Gegenstand der Erfindung. Die erfindungsgemäßen Polyolefinpartikel sind ein Granulat oder in anderer Art zerkleinert und enthalten neben dem Polyolefin das Treibmittel, sowie ggf. weitere Zusatzstoffe.

Die erfindungsgemäßen Polyolefinpartikel können erneut, oder falls vor dem Tempern noch nicht geschehen, erstmalig mit einem Antiblockingmittel beschichtet werden wie bereits beschrieben, oder entsprechend ihrer beabsichtigten Verwendung in anderer Weise behandelt werden.

Die erfindungsgemäßen expandierbaren Partikel können in an sich bekannter Weise aufgeschäumt (verschäumt) werden. Dabei können expandierte Polyolefinpartikel oder Polyolefin-Schaumstoffe entstehen. Erfindungsgegenstand ist daher auch die Verwendung der expandierbaren Polyolefinpartikel zur Herstellung von expandierten Polyolefinpartikeln oder von Polyolefin-Schaumstoffen.

Das Verschäumen erfolgt in der Regel durch Erwärmen der Partikel in üblichen Verschäumungsvorrichtungen, z.B. mit Heißluft oder überhitztem Wasserdampf in einem sog. Druckvorschäumer, wie er zur Verarbeitung von expandierbarem Polystyrol (EPS) üblich ist. Bevorzugt verschäumt man die Partikel bei einer Temperatur, bei der sie erweichen (Erweichungsbereich), z.B. bei Temperaturen von 100 bis 180°C.

Verschäumt man mit Wasserdampf, so beträgt je nach Art und Menge von Polyolefin und Treibmittel, und der gewünschten Dichte des herzustellenden Schaums, der Druck des Wasserdampfs üblicherweise 2 bis 8, bevorzugt 1 bis 5 bar (absolut). Dabei ergeben höhere Drucke geringere Dichten des verschäumten Polyolefins, d.h. mit dem Wasserdampfdruck kann man die gewünschte Dichte einstellen. Die Dauer des Verschäumens beträgt üblicherweise 1 bis 300, bevorzugt 1 bis 30 sec. Nach dem Verschäumen wird entspannt und abgekühlt. Bevorzugt beträgt der Expansionsfaktor beim Verschäumen 2 bis 50.

Expandierte Partikel entstehen beispielsweise, wenn die expandierbaren Partikel ohne Verwendung einer geschlossenen Form aufgeschäumt werden. Schaumstoffe lassen sich z.B. durch Verschäumen der expandierbaren Polyolefinpartikel in geschlossenen Formen herstellen. Die Schaumstoffe können Halbzeuge sein, beispielsweise Platten, Profile oder Bahnen, oder fertige Formteile mit einfacher oder komplizierter Geometrie. Demnach schließt der Begriff Polyolefin-Schaumstoff, Schaumstoffhalbzeuge und Schaumstoff-Formteile ein.

Mit dem erfindungsgemäßen Verfahren lassen sich expandierbare Polyolefinpartikel einfacher herstellen als mit den Verfahren des Standes der Technik. Es fallen keine Abwässer an, die zu reinigen wären. Das Polyolefin kann mit gängigen Granulatoren zerkleinert werden. Aufwändige, unter Überdruck betriebene Unterwasser- oder Wasserringgranulierungen sind nicht erforderlich.

Erfindungsgemäß wird nicht in der Hitze ein erweichtes Polymer imprägniert, sondern das Polymer zunächst ohne Treibmittel unter kontrollierten Bedingungen erhitzt und wieder abgekühlt, also getempert, und erst nach dem Abkühlen ein festes Polymer kalt imprägniert. Durch diese Trennung von Erhitzen und Imprägnierung können Partikel mit definierten Eigenschaften hergestellt werden, insbesondere solche mit einem DSC-Doppelpeak.

### Beispiele:

Es wurden folgende Einsatzstoffe verwendet:
- PP:: Propylen-Randomcopolymer enthaltend ca. 2 Gew.-% Ethylen, mit einer Melt Flow Rate (ISO 1133) von 8,0 g/10 min bei 230°C und 2,16 kg Belastung.
- Ruß:: Furnace-Ruß mit einer mittleren Teilchengröße von 22 nm.
- Wachs:: Polyethylenwachs mit einem zahlenmittleren Molekulargewicht von 3000. Es wurde das Handelsprodukt Luwax® AF31 von BASF verwendet.
- Talkum:: Es wurde das Handelsprodukt HP 325 verwendet.
- s-Pentan:: Es wurde ein technisches Pentanisomerengemisch eingesetzt.
- CaCO₃:: Calciumcarbonat mit einer mittleren Teilchengröße von 3 µm als Antiblockingmittel.
- Tensid:: Maleinsäure-Olefin-Copolymer, Natriumsalz. Es wurde das Handelsprodukt Sokalan® CP9 von BASF verwendet.

### a) Vermischen von PP und Nukleierungsmittel im Extruder

In einem Einschneckenextruder wurde bei 220°C eine Mischung (TI. bedeutet Gew.-Teile)
- M1 für Granulat G1: 100 TI. PP, 1 TI. Wachs, 1 TI. Talkum, bzw.
- M2 für Granulat G2: 100 TI. PP, 2 TI. Ruß, 1 TI. Wachs, 1 TI. Talkum
unter Aufschmelzen extrudiert und das abgekühlte, erstarrte Extrudat mit einem üblichen Granulator bei Atmosphärendruck zu einem zylinderförmigen Minigranulat G1 bzw. G2 zerkleinert. Der Durchmesser des Granulats betrug 0,8 bis 1,2 mm, die Länge 1,8 bis 3 mm.

### b1 ) Tempern des Granulats an Luft: Vergleichsbeispiele V1 und V2, Beispiele 1 bis 3

Das Minigranulat G1 wurde in einem Taumelmischer mit der in der Tabelle genannten Menge CaCO₃ vermischt, das erhaltene Granulat auf Blechen oder Metallgeweben verteilt und in einem vorgeheizten Umluftwärmeschrank getempert. Die Tabelle nennt die Aufheizzeit bis zum Erreichen der Tempertemperatur, die Tempertemperatur (Maximaltemperatur) und die Temperzeit bei dieser Tempertemperatur. Nach dem Tempern wurde das Granulat auf ein kaltes Blech gegeben und ggf. entstandene Agglomerate mechanisch getrennt.

### b2) Tempern des Granulats in Wasser: Beispiele 4 bis 6

Das Minigranulat G2 wurde in einem Druckbehälter mit Wasser und den in der Tabelle genannten Mengen CaCO₃ und Tensid vermischt, und die Mischung erhitzt. Die Wassermenge betrug das Zweifache der Granulatmasse. Die Tabelle nennt die Aufheizzeit bis zum Erreichen der Tempertemperatur, die Tempertemperatur (Maximaltemperatur) und die Temperzeit bei dieser Tempertemperatur. Danach wurde der Druckbehälter abgekühlt, das Granulat durch Sieben abgetrennt und getrocknet.

### b3) DSC-Untersuchung der getemperten Granulate

Das nach b1 ) oder b2) erhaltene Granulat wurde mittels DSC untersucht (Starttemperatur 50°C, Stoptemperatur 200°C, Heizrate 20 K/min). Alle Granulate zeigten im DSC-Diagramm einen Doppelpeak. Die Tabelle nennt das Maximum des Hochtemperaturpeaks.

Die Granulate der Vergleichsbeispiele V1 und V2 wurden nicht getempert.

### c) Imprägnierung

Das nach b1 ) oder b2) erhaltene Granulat wurde mit s-Pentan im Überschuss überschichtet und Imprägniert. Bei Imprägniertemperaturen über dem Siedepunkt des s-Pentans wurde ein 300 ml-Rührautoklav verwendet. Die Tabelle nennt die Imprägniertemperatur, die Imprägnierzeit bei dieser Temperatur und den Treibmittelgehalt des erhaltenen imprägnierten Granulats. Nach der Imprägnierung wurden die Partikel vom Treibmittel abgetrennt und getrocknet.

### d) Verschäumen

Die nach c) erhaltenen expandierbaren Partikel wurden in einem mit Wasserdampf beheizten Labor-Druckvorschäumer verschäumt. Die Tabelle nennt den eingesetzten Dampfdruck (absolut); die Schäumzeit betrug 8 sec. Man erhielt expandierte Partikel, deren Schüttdichte ebenfalls in der Tabelle angegeben ist.

**Tabelle: V bedeutet zum Vergleich, TI bedeutet Gew.-Teile bezogen auf 100 Gew.-Teile Granulat**

| Beispiel | V1 | V2 | 1 | 2 | 3 | 4 | 5 | 6 |
|---|---|---|---|---|---|---|---|---|
| Granulat | G1 | | | | | G2 | | |

| Tempern | | | | | | | | |
|---|---|---|---|---|---|---|---|---|
| Menge CaCO₃ [TI] | - | - | 1 | 2 | 2 | 3,5 | | |
| Menge Tensid [TI] | - | - | - | - | - | 0,02 | | |
| Aufheizzeit [min] | kein Tempern | | 20 | 30 | 15 | 120 | | |
| Tempertemp. [°C] | kein Tempern | | 156 | 158 | 157 | 156 | | |
| Temperzeit [min] | kein Tempern | | 30 | 15 | 15 | 30 | | |
| Hochtemp.-peak bei [°C] | kein Doppelpeak | | 164,2 | 166,2 | 165,0 | 166,0 | | |

| Imprägnierung | | | | | | | | |
|---|---|---|---|---|---|---|---|---|
| Imprägniertemp. [°C] | 25 | 70 * | 60 * | 70 * | 70 * | 30 | 60 * | 60 * |
| Imprägnierzeit [h] | 1,5 | 7 | 3 | 7 | 7 | 1 | 1 | 0 ** |
| Treibmittelgehalt [TI] | 6,9 | 10 | 9,3 | 14,2 | 12,6 | 7,9 | 11,8 | 11,3 |

| Verschäumen | | | | | | | | |
|---|---|---|---|---|---|---|---|---|
| Wasserdampfdruck [bar] | 4 | 4 | 4 | 4 | 3,5 | 4 | 4 | 4 |
| Schüttdichte [g/I] | kein Schaum erhalten | | 165 | 39 | 42 | 57 | 35 | 42 |

| | | | | | | | | |
|---|---|---|---|---|---|---|---|---|
| * Imprägnierung im Rührautoklaven | | | | | | | | |
| ** Nach Erreichen der Imprägniertemperatur wurde sofort wieder abgekühlt. | | | | | | | | |

Die Beispiele zeigen, dass sich mit dem erfindungsgemäßen Verfahren auf einfache Weise expandierbare Polyolefinpartikel herstellen ließen, die einen definierten DSC-Doppelpeak aufwiesen. Durch Variation der Temper- bzw. Imprägnierbedingungen ließen sich die Partikeleigenschaften variieren. Partikel, die (nicht erfindungsgemäß) nicht getempert wurden, ließen sich nicht verschäumen.

## Patentansprüche

1. Verfahren zur Herstellung von expandierbaren Polyolefinpartikeln aus einem Polyolefin, einem Nukleierungsmittel und einem Treibmittel, **dadurch gekennzeichnet, dass** man
a) das Polyolefin mit dem Nukleierungsmittel in einem Extruder vermischt und das erhaltene Polyolefin bis zur Erstarrung abkühlt,
b) das abgekühlte Polyolefin tempert, indem man es auf eine Temperatur im Bereich von 100 bis 200°C erwärmt und danach wieder auf unter 100°C abkühlt, und
c) das erhaltene Polyolefin bei unter 100°C mit dem Treibmittel imprägniert,
wobei das Polyolefin am Ende von Schritt a) oder b) granuliert wird.

2. Verfahren nach Anspruch 1, **dadurch gekennzeichnet, dass** das Polyolefin ein Homopolymer oder Copolymer des Propylens ist.

3. Verfahren nach den Ansprüchen 1 bis 2, **dadurch gekennzeichnet, dass** das Nukleierungsmittel ausgewählt ist aus Talkum, Polyolefinwachsen, Paraffinen, Rußen, Graphitpulver, Kieselsäuren, Zeolithen, Citronensäureestern, Bentoniten und deren Mischungen.

4. Verfahren nach den Ansprüchen 1 bis 3, **dadurch gekennzeichnet, dass** das Tempern derart ausgestaltet wird, dass das in Schritt b) erhaltene Polyolefin im DSC-Diagramm einen Doppelpeak aufweist.

5. Verfahren nach den Ansprüchen 1 bis 4, **dadurch gekennzeichnet, dass** das Treibmittel ausgewählt ist aus Kohlenwasserstoffen, Alkoholen, Ketonen, Estern, Ethern, organischen Carbonaten, Halogenkohlenwasserstoffen und deren Mischungen.

6. Verfahren nach den Ansprüchen 1 bis 5, **dadurch gekennzeichnet, dass** in Schritt b) auf 120 bis 170°C erwärmt wird.

7. Verfahren nach den Ansprüchen 1 bis 6, **dadurch gekennzeichnet, dass** in Schritt c) bei 0 bis 80°C imprägniert wird.

8. Expandierbare Polyolefinpartikel, erhältlich nach dem Verfahren gemäß den Ansprüchen 1 bis 7.

9. Verwendung der expandierbaren Polyolefinpartikel gemäß Anspruch 8 zur Herstellung von expandierten Polyolefinpartikeln oder Polyolefin-Schaumstoffen.

## Claims

1. A process for producing expandable polyolefin beads from a polyolefin, a nucleating agent and a blowing agent, which comprises
a) mixing the polyolefin with the nucleating agent in an extruder and cooling the resulting polyolefin until solidification,
b) heat-treating the cooled polyolefin by heating it to a temperature in the range from 100 to 200°C and then cooling it again back to below 100°C, and
c) impregnating the resulting polyolefin with the blowing agent at below 100°C,
and the polyolefin is granulated at the end of step a) or b).

2. The process according to claim 1, wherein the polyolefin is a homopolymer or copolymer of propylene.

3. The process according to claims 1 to 2, wherein the nucleating agent is selected from talc, polyolefin waxes, paraffins, carbon blacks, graphite powders, silicas, zeolites, citric esters, bentonites and mixtures thereof.

4. The process according to claims 1 to 3, wherein the heat treatment is configured in such a way that the DSC diagram of the polyolefin obtained in step b) has a double peak.

5. The process according to claims 1 to 4, wherein the blowing agent is selected from hydrocarbons, alcohols, ketones, esters, ethers, organic carbonates, halohydrocarbons and mixtures thereof.

6. The process according to claims 1 to 5, wherein heating in step b) is at from 120 to 170°C.

7. The process according to claims 1 to 6, wherein impregnating in step c) is at from 0 to 80°C.

8. Expandable polyolefin beads, obtainable by the process according to claims 1 to 7.

9. The use of the expandable polyolefin beads according to claim 8 for producing expanded polyolefin beads or polyolefin foams.

## Revendications

1. Procédé de préparation de particules de polyoléfine expansibles à base d'une polyoléfine, d'un agent de nucléation et d'un agent gonflant, **caractérisé en ce que**
a) on mélange la polyoléfine et l'agent de nucléation dans une extrudeuse et on refroidit la polyoléfine obtenue jusqu'à la solidification,
b) on recuit la polyoléfine refroidie, en la chauffant à une température de l'ordre de 100 à 200°C et ensuite en la refroidissant à nouveau à moins de 100°C, et
c) on imprègne la polyoléfine obtenue avec l'agent gonflant à moins de 100°C,
la polyoléfine étant granulée à la fin de l'étape a) ou b).

2. Procédé suivant la revendication 1, **caractérisé en ce que** la polyoléfine est un homopolymère ou copolymère du propylène.

3. Procédé suivant les revendications 1 et 2, **caractérisé en ce que** l'agent de nucléation est choisi parmi du talc, des cires de polyoléfine, des paraffines, des noirs de fumée, des poudres de graphite, des acides siliciques, des zéolites, des esters d'acide citrique, des bentonites et leurs mélanges.

4. Procédé suivant les revendications 1 à 3, **caractérisé en ce que** le recuit est conçu de façon que la polyoléfine obtenue dans l'étape b) présente un double pic dans le diagramme DSC.

5. Procédé suivant les revendications 1 à 4, **caractérisé en ce que** l'agent gonflant est choisi parmi des hydrocarbures, des alcools, des cétones, des esters, des éthers, des carbonates organiques, des hydrocarbures halogénés et leurs mélanges.

6. Procédé suivant les revendications 1 à 5, **caractérisé en ce que**, dans l'étape b), on chauffe à 120 jusqu'à 170°C.

7. Procédé suivant les revendications 1 à 6, **caractérisé en ce que**, dans l'étape c), on imprègne à 0 jusqu'à 80°C.

8. Particules de polyoléfine expansibles, que l'on peut obtenir suivant le procédé selon les revendications 1 à 7.

9. Utilisation des particules de polyoléfine expansibles suivant la revendication 8, pour la préparation de particules de polyoléfine expansées ou de mousses de polyoléfine.
